# EUROPEAN PATENT APPLICATION

(11) **EP 4 456 307 A1**
(43) Date of publication of application: **30.10.2024**
(21) Application number: 22924327.4
(22) Date of filing: 07.11.2022
(51) Int. Cl.: H01M 50/449, H01M 50/411, H01M 50/403, H01M 10/052

(54) **METHOD FOR MANUFACTURING MULTI-LAYER SEPARATOR**

(30) Priority: 27.01.2022 KR 20220011988
(71) Applicant: W-Scope Korea Co., Ltd., Cheongju-si, Chungcheongbuk-do 28122 (KR); W-Scope Chungju Plant Co., Ltd., Daesowon-myeon Chungju-si, Chungcheongbuk-do 27461 (KR)
(72) Inventor: RYU, Kyoung Sun, Cheongju-si Chungcheongbuk-do 28113 (KR); CHOI, Kwang Ho, Cheongju-si, Chungcheongbuk-do 28113 (KR); KIM, Byung Hyun, Cheongju-si Chungcheongbuk-do 28121 (KR); JEONG, Jin Hyun, Cheongju-si, Chungcheongbuk-do 28121 (KR); KIM, Hyun Joo, Cheongju-si Chungcheongbuk-do 28121 (KR); KIM, Jeong Rae, Seoul 03454 (KR)
(74) Representative: BCKIP Part mbB
(86) International application number: PCT/KR2022/017324
(87) International publication number: WO 2023/146073

(57) **Abstract**

One aspect of the present invention provides a method of manufacturing a multi-layer separator, which includes (a) extruding a first composition including a first polyolefin and a first pore forming agent to obtain a first sheet; (b) extruding a second composition including a second polyolefin and a second pore forming agent to obtain a second sheet; (c) stretching each of the first sheet and the second sheet in the machine direction (MD) to obtain a first precursor film and a second precursor film; (d) laminating the first precursor film and the second precursor film to obtain a stacked structure; and (e) stretching the stacked structure in the transverse direction (TD), and then removing the first pore forming agent and the second pore forming agent from the stacked structure.

## Description

### [Technical Field]

The present invention relates to a method of manufacturing a multi-layer separator, and more particularly to a method of manufacturing a multi-layer separator which can enhance the required mechanical properties for a separator by uniformizing the structural properties of all layers constituting the multi-layer separator.

### [Background Art]

Lithium secondary batteries are widely used as a power source for various types of electrical products that require miniaturization and a light weight, such as smartphones, notebooks, tablets, PCs, etc., and as the application area expands to smart grids and medium-to-large batteries for electric vehicles, the development of a lithium secondary battery with large capacity, a long lifespan, and high stability is required.

Recently, with the high energy density of lithium secondary batteries, the load on the battery is increasing, and therefore, a high level of safety is required for a separator. Accordingly, not only the mechanical properties of the separator but also the importance of heat resistance, which can ensure safety, is being highlighted.

Conventionally, as a separator for lithium secondary batteries, polyolefin-based microporous films have been used. Among the polyolefin-based microporous films, particularly, a microporous film composed of a polyethylene-based resin is known to have an excellent shutdown function, which blocks the flow of current by blocking the micropores of the porous film when the temperature of the battery rises. However, the battery temperature may rise again after the shutdown function is operated. In this case, as the separator melts (meltdown), a short circuit occurs inside the battery, which generates a large amount of heat, causing issues such as smoke, ignition, and explosion. Therefore, there is a need to suppress the risk of short circuit even at temperatures higher than the shutdown temperature.

To achieve both the shutdown and meltdown characteristics of the separator, a method of blending polyethylene and polypropylene or laminating a microporous film composed of a polyethylene-based resin and a microporous film composed of a polypropylene-based resin has been proposed.

For example, Korean Patent Application Publication Nos. 10-2005-0120689 and 10-2016-0094448 disclose methods of manufacturing a multi-layer separator by co-extruding two or more resin compositions, thereby improving the mechanical strength and heat resistance of the multi-layer separator in a balanced manner. However, in these methods, since interlayer lamination, that is, stacking is performed by co-extrusion in the step before the pore structure is formed by stretching, there is a problem in that the structural properties of each layer become non-uniform during the subsequent film forming processes including stretching and extraction. Specifically, as the thickness deviation between areas of the outermost layer of a multi-layer separator increases, the mechanical properties of the separator itself may become non-uniform, and particularly, during battery assembly using the separator, a region where the thickness is significantly thinner than the surrounding area is easily damaged or broken. This problem is more prominent in thin film-type separators (thickness: about 15 µm or less, and preferably, about 10 µm or less) corresponding to the recent trends of integrated and high-capacity batteries.

In addition, Korean Patent Application Publication No. 10-2008-0028444 discloses, as shown in FIG. 1, a method of manufacturing a multi-layer separator by laminating or stacking two or more separators, which have been completely formed into a film, through extrusion, stretching, extraction, and heat setting. However, in this case, there is a problem that each layer is easily delaminated because a sufficient interlayer bonding force cannot be provided. To improve this, a step of performing re-stretching and heat-setting after 2 or more separators are laminated or stacked may be further included, but there is a problem of decreased productivity and economic efficiency due to added equipment and processes.

### [Disclosure]

### [Technical Problem]

As the present invention is intended to solve the above-described problems of the conventional art, the present invention is directed to providing, in order to manufacture a thin film-type multi-layer separator having a thickness of about 15 µm or less, and preferably, about 10 µm or less, a method of manufacturing a multi-layer separator, which can stably ensure the required mechanical properties for the separator and improve productivity and economic feasibility at the same time by uniformizing the structural properties of all layers constituting the multi-layer separator.

### [Technical Solution]

One aspect of the present invention provides a method of manufacturing a multi-layer separator, which includes (a) extruding a first composition including a first polyolefin and a first pore forming agent to obtain a first sheet; (b) extruding a second composition including a second polyolefin and a second pore forming agent to obtain a second sheet; (c) stretching each of the first sheet and the second sheet in the machine direction (MD) to obtain a first precursor film and a second precursor film; (d) laminating the first precursor film and the second precursor film to obtain a stacked structure; and (e) stretching the stacked structure in the transverse direction (TD), and then removing the first pore forming agent and the second pore forming agent from the stacked structure.

In one embodiment, each of the first polyolefin and the second polyolefin may include one selected from the group consisting of polyethylene, polypropylene, polybutylene, polymethylpentene, and a combination or copolymer of two or more thereof.

In one embodiment, the weight average molecular weight of each of the first polyolefin and the second polyolefin may range from 300,000 to 2,000,000.

In one embodiment, each of the first pore forming agent and the second pore forming agent may be paraffin oil having a kinematic viscosity of 50 to 100 cSt at 40 °C.

In one embodiment, the first composition or the second composition may further include a hydrophilic polymer.

In one embodiment, the content of the hydrophilic polymer in the first composition or the second composition may be 0.1 to 5 wt%.

In one embodiment, the hydrophilic polymer may be one selected from the group consisting of ethylene vinyl acetate, ethylene vinyl alcohol, polyvinyl alcohol, polyacrylic acid, a polyoxyethylene-polyoxypropylene block copolymer, polyethylene glycol, polyethylene oxide, polyvinylpyrrolidone, polyvinyl acetal, polyvinyl butyral, a cellulose derivative, glycerol, and a combination of two or more thereof.

In one embodiment, in the step (d), the first precursor film and the second precursor film may be pressed to face each other, and at least a part of the interface between the first precursor film and the second precursor film may be adhered.

Another aspect of the present invention provides a multi-layer separator manufactured according to the above-described manufacturing method, wherein the thickness deviation of the outermost layer, measured by the following equation, is 10% or less. Thickness deviation (%) = {(maximum thickness)-(minimum thickness)}/(minimum thickness * 100

In this equation, the thickness deviation is determined by a method that includes obtaining five samples having a size of 20 mm* 100 mm (MD*TD) by cutting the multi-layer separator to 100 mm* 100 mm (MD*TD) and dividing the multi-layer separator into 5 equal parts in the machine direction (MD); measuring the thickness of the outermost layer of the sample at the center thereof in the transverse direction (TD); and calculating a thickness deviation according to the above equation based on the maximum and minimum values of the thickness.

In one embodiment, the multi-layer separator may satisfy at least one of the conditions (i) to (vi) below.
(i) thickness: 1 to 15 µm, (ii) puncture strength: 600 gf or more, (iii) machine direction (MD) tensile strength: 1,300 to 2,000 kgf/cm², (iv) transverse direction (TD) tensile strength: 3,000 to 6,000 kgf/cm², (v) machine direction (MD) tensile elongation: 150 to 450%, and (vi) transverse direction (TD) tensile elongation: 30 to 100%.

### [Advantageous Effects]

A method of manufacturing a multi-layer separator according to one aspect of the present invention includes (a) extruding a first composition including a first polyolefin and a first pore forming agent to obtain a first sheet; (b) extruding a second composition including a second polyolefin and a second pore forming agent to obtain a second sheet; (c) stretching each of the first sheet and the second sheet in the machine direction (MD) to obtain a first precursor film and a second precursor film; (d) laminating the first precursor film and the second precursor film to obtain a stacked structure; and (e) stretching the stacked structure in the transverse direction (TD), and then removing the first pore forming agent and the second pore forming agent from the stacked structure. Therefore, when a thin film-type multi-layer separator having a thickness of about 15 µm or less, and preferably, about 10 µm or less is manufactured, the structural properties of all layers constituting the multi-layer separator can be uniformized to stably ensure the required mechanical properties for the separator, and improve productivity and economic feasibility.

It should be understood that the effects of the present invention are not limited to the above-described effects, and includes all effects that can be deduced from the configuration of the present invention described in the detailed description or claims of the present invention.

### [Description of Drawings]

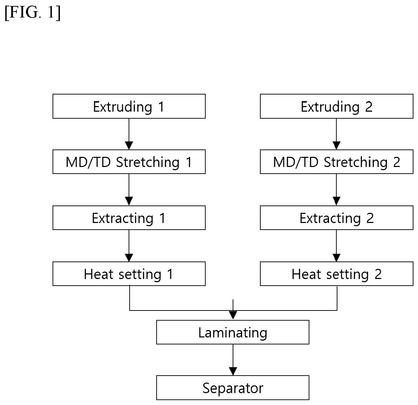

FIG. 1 illustrates a method of manufacturing a multi-layer separator according to the related art.
FIG. 2 illustrates a method of manufacturing a multi-layer separator according to one embodiment of the present invention.
FIG. 3 illustrates a method of measuring the thickness deviation of a multi-layer separator according to one embodiment of the present invention.
FIG. 4 illustrates a method of manufacturing a multi-layer separator according to a comparative example of the present invention.

### [Modes of the Invention]

Hereinafter, the present invention will be described in detail with reference to the accompanying drawings. However, the present invention may be implemented in a variety of different forms, and is not limited to the embodiments described herein. In addition, in the drawings, for clear explanation of the present invention, parts that are not related to the description are omitted, and like numerals denote like parts throughout the specification.

Throughout the specification, when a part is "connected" to another part, it means that the one part is "directly connected" or "indirectly connected" with a third member therebetween. In addition, when a certain part "includes" a certain component, it means that, unless particularly stated otherwise, another component may be further included, rather than excluded.

Hereinafter, embodiments of the present invention will be described in detail with reference to the accompanying drawings.

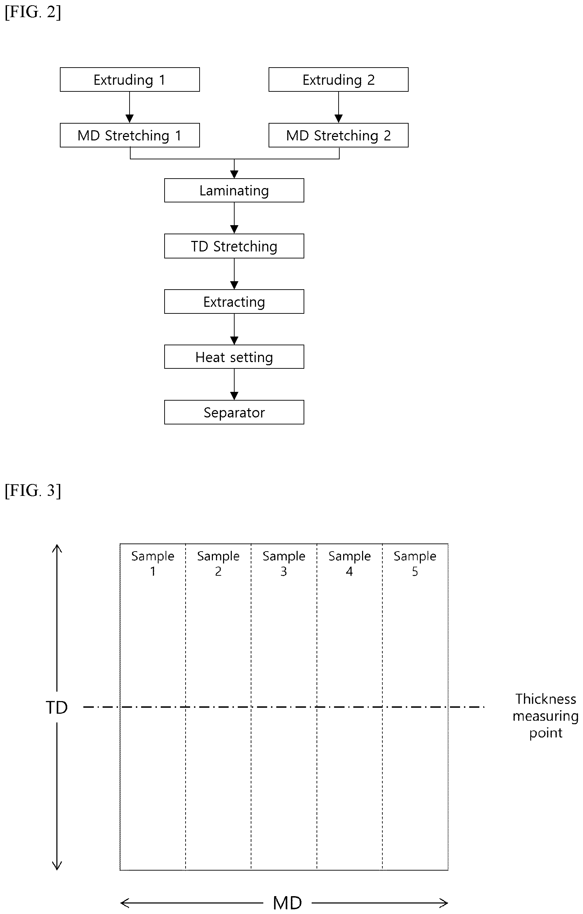

FIG. 2 illustrates a method of manufacturing a multi-layer separator according to one embodiment of the present invention. Referring to FIG. 2, the method of manufacturing a multi-layer separator according to one aspect of the present invention may include (a) extruding a first composition including a first polyolefin and a first pore forming agent to obtain a first sheet; (b) extruding a second composition including a second polyolefin and a second pore forming agent to obtain a second sheet; (c) stretching each of the first sheet and the second sheet in the machine direction (MD) to obtain a first precursor film and a second precursor film; (d) laminating the first precursor film and the second precursor film to obtain a stacked structure; and (e) stretching the stacked structure in the transverse direction (TD), and then removing the first pore forming agent and the second pore forming agent from the stacked structure.

In the step (a) and the step (b), each of the first composition and the second composition, which have the same or different compositions, may be extruded to obtain the first sheet and the second sheet. The extrusion may be performed using two independent extruders (first extruder and second extruder) arranged in parallel with each other. The first extruder and the second extruder have the same structure, composition, specifications, and capacity and the like, and if necessary, the first and second extruders may be designed differently to determine the composition and physical properties of the first composition and the second composition and thus optimize the physical properties of each layer constituting the multi-layer separator. In the first extruder and the second extruder, the first composition and the second composition may be melted and kneaded, and discharged at a predetermined thickness using a device or equipment such as a T-die installed at the rear end of the first extruder and the second extruder to obtain the first sheet and the second sheet, respectively.

Each of the first polyolefin and the second polyolefin may include one selected from the group consisting of polyethylene, polypropylene, polybutylene, polymethylpentene, and a combination or copolymer of two or more thereof, preferably, polyethylene and/or polypropylene, and more preferably, polyethylene, but the present invention is not limited thereto.

The weight average molecular weight of each of the first polyolefin and the second polyolefin may range from 300,000 to 2,000,000, and the polydispersity index (PDI) (Mw/Mn) thereof may range from 3 to 7. The first polyolefin and the second polyolefin may be homogeneous, and if necessary, heterogeneous. When the PDI of each of the first polyolefin and the second polyolefin is less than 3, due to reduced dispersibility with the first pore forming agent and the second pore forming agent, the uniformity of the manufactured multi-layer separator may be degraded, and when the PDIs exceed 7, the mechanical properties of the multi-layer separator may be degraded.

When the first polyolefin and the second polyolefin are heterogeneous, the first polyolefin may be a high-density polyethylene (HDPE) having a weight average molecular weight ranging from 300,000 to 800,000, and the second polyolefin may be an ultra-high-molecular weight polyethylene (UHMWPE) having a weight average molecular weight ranging from 1,000,000 to 2,000,000. Generally, since the HDPE may contribute to the physical properties of the separator, such as tensile strength, tensile elongation, and puncture strength, and the UHMWPE may contribute to the heat resistance of the separator, by combining the two polymers, the mechanical properties and heat resistance of the separator may be implemented in a complementary manner. However, these effects are not necessarily complementary, and in some cases, the mechanical properties and/or heat resistance may be further improved.

The ratio of the weight average molecular weight of the second polyolefin to the weight average molecular weight of the first polyolefin may range from 0.5 to 2, and preferably, from 0.65 to 1.5. When the ratio is less than 0.5 or exceeds 2, in the multi-layer separator, deviations in the structural properties, the mechanical properties, and/or heat resistance of layers derived from the first composition and the second composition may fall outside the acceptable range, reducing compatibility with the battery.

Each of the first pore forming agent and the second pore forming agent may be paraffin oil having a kinematic viscosity of 50 to 100 cSt at 40 °C. The first pore forming agent and the second pore forming agent may be homogeneous, and if necessary, heterogeneous. When the kinematic viscosities at 40 °C of the first pore forming agent and the second pore forming agent fall outside the above range, the viscosities of the first composition and the second composition may be excessively low or high, thereby reducing processability and dispersibility. In addition, each of the first pore forming agent and the second pore forming agent may be one selected from the group consisting of paraffin wax, mineral oil, solid paraffin, soybean oil, rapeseed oil, palm oil, di-2-ethylhexyl phthalate, dubutyl phthalate, diisononyl phthalate, diisodecyl phthalate, bis(2-propylheptyl)phthalate, naphthene oil, a combination of two or more thereof, other than the paraffin oil, but the present invention is not limited thereto. Each of the first composition and the second compositions may include 20 to 50 wt% of the first or second polyolefins, and 50 to 80% of the pore forming agent.

The first composition or the second composition may further include a hydrophilic polymer. A separator composed of only the first polyolefin and the second polyolefin is inherently hydrophobic, but when the separator is manufactured, the polyolefins and a certain amount of the hydrophilic polymer may be melted or kneaded, thereby imparting a certain level of hydrophilicity to the separator. In this case, by deducing and combining the molecular weight of the polyolefin and the content of the hydrophilic polymer in the separator as variables that optimize and implement the required level of electrolyte impregnability, the productivity of the process for melting and kneading the hydrophilic polymer with the polyolefin, the hydrophilicity of the separator, and the resulting electrolyte impregnability may be achieved in a balanced manner.

The layer further including the hydrophilic polymer in the multi-layer separator may have a hydrophobic area containing the polyolefin, and hydrophilic areas containing a hydrophilic polymer, which are dispersed in the hydrophobic area. The content of the hydrophilic areas in the layer may be 0.1 to 7.5 wt%, which may be realized by adjusting the content of the hydrophilic polymer in the first composition or the second composition to the range of 0.1 to 5 wt%.

In this layer, the hydrophobic area composed of the first polyolefin or the second polyolefin, and the hydrophilic areas composed of the hydrophilic polymer may be present in a continuous phase and a discontinuous phase, respectively. In this layer, the hydrophilic areas may be uniformly dispersed in a matrix formed in the hydrophobic area to impart substantially uniform hydrophilicity in the entire area according to the area and/or thickness direction(s) of the layer, and therefore, the electrolyte impregnability of the layer may be improved. The term "matrix" used herein refers to a component that forms a continuous phase in a layer or separator containing two or more components. That is, in this layer, the hydrophobic area containing the polyolefin may be present in a continuous phase, and in the continuous phase area, the hydrophobic areas containing the hydrophilic polymer may be dispersed in a discontinuous phase.

In this layer, the content of the hydrophilic areas may be 0.1 to 7.5 wt%, preferably, 1 to 6 wt%, and more preferably, 3 to 6 wt%. When the content of the hydrophilic areas is 0.1 wt%, the required level of electrolyte impregnability may not be achieved, and when the content exceeds 7.5 wt%, electrolyte impregnability may be further improved, but the mechanical properties and heat resistance of the separator, which can be implemented with the polyolefins, may be reduced. In addition, when the content of the hydrophilic area exceeds 7.5 wt%, due to reduced dispersibility of the hydrophilic polymer, the surface of the layer has a brightness different from the surrounding area and the number of surface defects with a size of 2 mm or more increases, resulting in a decrease in appearance quality, and resistance may change rapidly at a site and/or area where the hydrophilic polymer is randomly aggregated on the surface and/or inside the layer, adversely affecting the electrochemical properties of the battery.

When the first polyolefin or the second polyolefin mixed with the hydrophilic polymer is HDPE, the weight average molecular weight of the polyethylene may range from 200,000 to 800,000, preferably, from 250,000 to 600,000, and more preferably, from 300,000 to 500,000, and the ratio of the content of the hydrophilic areas to the weight average molecular weight of HDPE may range from 0.1*10⁻⁵ to 1.1*10⁻⁵, preferably, from 0.2*10⁻⁵ to 1*10⁻⁵, and more preferably, from 0.5*10⁻⁵ to 1*10⁻⁵.

When the ratio of the content of the hydrophilic areas to the weight average molecular weight of HDPE is less than 0.1*10⁻⁵, it is impossible to achieve the required level of electrolyte impregnability, and when the ratio is exceeds 1.1*10⁻⁵, not only does electrolyte impregnability decrease, but the mechanical properties and heat resistance of a separator, which can be achieved by HDPE, may decrease. In addition, when the ratio of the content of the hydrophilic areas to the weight average molecular weight of HDPE exceeds 1.1*10⁻⁵, due to reduced dispersibility of the hydrophilic polymer, the surface of the separator has a brightness different from the surrounding area and the number of surface defects with a size of 2 mm or more increases, resulting in a decrease in appearance quality, and resistance may change rapidly at a site and/or area where the hydrophilic polymer is randomly aggregated on the surface and/or inside the separator, adversely affecting the electrochemical properties of the battery.

Meanwhile, when the first polyolefin or the second polyolefin mixed with the hydrophilic polymer is UHMWPE, the weight average molecular weight of the polyethylene may range from 1,000,000 to 2,000,000, and preferably, from 1,000,000 to 1,500,000, and when the ratio of the content of the hydrophilic areas to the weight average molecular weight of UHMWPE is 0.1*10⁻⁵ to 0.75*10⁻⁵, preferably, 0.15*10⁻⁵ to 0.6*10⁻⁵, and more preferably, 0.3*10⁻⁵ to 0.6*10⁻⁵.

When the ratio of the content of the hydrophilic areas to the weight average molecular weight of UHMWPE is less than 0.1*10⁻⁵, it is impossible to achieve the required level of electrolyte impregnability, and when the ratio exceeds 0.75*10⁻⁵, not only does electrolyte impregnability decrease, but the mechanical properties and heat resistance of a separator, which can be achieved by HDPE, may decrease. In addition, when the ratio of the content of the hydrophilic areas to the weight average molecular weight of UHMWPE exceeds 0.75*10⁻⁵, due to reduced dispersibility of the hydrophilic polymer, the surface of the layer has a brightness different from the surrounding area and the number of surface defects with a size of 2 mm or more increases, resulting in a decrease in appearance quality, and resistance may change rapidly at a site and/or area where the hydrophilic polymer is randomly aggregated on the surface and/or inside the layer, adversely affecting the electrochemical properties of the battery.

The hydrophilic polymer may be one selected from ethylene vinyl acetate, ethylene vinyl alcohol, polyvinyl alcohol, polyacrylic acid, a polyoxyethylene-polyoxypropylene block copolymer, polyethylene glycol, polyethylene oxide, polyvinylpyrrolidone, polyvinylacetal, polyvinylbutyral, a cellulose derivative, glycerol, and a combination of two or more thereof, preferably, ethylene vinyl acetate, and more preferably, ethylene vinyl acetate in which the content of vinyl acetate is 15 to 30 wt%, but the present invention is not limited thereto. When the content of vinyl acetate in the ethylene vinyl acetate is less than 15 wt%, the mechanical properties and hydrophilicity of the separator may be reduced, and when the content is more than 30 wt%, processability and the resulting dispersibility of the hydrophilic polymer may be reduced. Meanwhile, as the hydrophilic polymer, in addition to the above, various types of hydrophilic polymers having hydrophilic functional groups, such as amine, amide, hydroxyl, and carboxylic acid groups in the main chain and/or the side chain may be applied.

Meanwhile, among the above hydrophilic polymers, the ethylene vinyl acetate may contribute to not only improving the tensile elongation of each layer derived from the first composition and the second composition and the multi-layer separator including the same by imparting softness, that is, a certain flexibility, to the first polyolefin and the second polyolefin, but also improving the mechanical properties such as puncture strength by increasing the interlayer bonding force of each layer constituting the multi-layer separator.

In the step (c), the first sheet and the second sheet may be stretched in the machine direction (MD) to obtain a first precursor film and a second precursor film. The machine direction (MD) stretching of the first sheet and the second sheet may be performed using a first stretching machine and a second stretching machine, which are installed at the rear end of the first extruder and the second extruder, respectively.

The first stretching machine and the second stretching machine are devices for stretching the first sheet and the second sheet, which have been discharged from the first extruder and the second extruder, along the transfer direction in the process line, respectively, and the stretching directions of the first sheet and the second sheet by the first stretching machine and the second stretching machine may be defined as the machine direction (MD). The first stretching machine and the second stretching machine may each be roll stretching machines. A roll stretching machine includes a plurality of rolls along the transfer direction of a sheet, and the sheet may be stretched at a predetermined ratio along the machine direction (MD) by rotating the roll located at the rear end faster than that located at the front end. The stretching ratio of each of the first sheet and the second sheet may be 2 to 20 times, preferably, 5 to 10 times. In addition, the stretching ratios of the first sheet and the second sheet may be the same or different, preferably, their stretching ratios may be set to be the same in consideration of the adhesion of the first precursor film and the second precursor film and the resulting interlayer bonding force, but the present invention is not limited thereto.

In the step (d), the first precursor film and the second precursor film may be laminated to obtain a stacked structure. The lamination may be performed using a predetermined laminator. The laminator is a piece of equipment or device for laminating the first precursor film and the second precursor film manufactured by the first stretching machine and the second stretching machine. During the lamination, the first precursor film and the second precursor film may be pressed to face each other, and at least a part, preferably, all of the interface between the first precursor film and the second precursor film may be adhered. The adhesion may be performed using a physical means such as heat, ultrasound, high frequency, or laser applied to at least a part, and preferably, both of the surfaces of the first precursor film and the second precursor film, and through the adhesion, the driving stability of the stacked structure that passes through equipment or devices for subsequent stretching (TD), extraction, and heat setting may be improved. Accordingly, structural irregularities that appear in the outermost layer of the conventional multi-layer separator, for example, excessive deviations in the thickness and porosity of the outermost layer, may be effectively resolved.

In the step (e), after stretching the stacked structure in the transverse direction (TD), the first pore forming agent and the second pore forming agent may be removed from the stacked structure. The transverse direction (TD) stretching of the stacked structure may be performed using a third stretching machine.

The third stretching machine may stretch the stacked structure in the transverse direction (TD). The third stretching machine may be a tenter machine. The tenter machine may stretch the stacked structure at a predetermined ratio in a state in which predetermined members such as chucks and clips are space apart in the transverse direction and the corresponding members are fixed to both ends of the stacked structure in the transverse direction. The transverse direction (TD) stretching ratio of the stacked structure by the third stretching machine may be 2 to 20 times, preferably, 5 to 10 times, but the present invention is not limited thereto.

Afterward, by applying a predetermined extraction solvent to the stacked structure, the first pore forming agent and the second pore forming agent may be simultaneously and selectively extracted and removed from the stacked structure, specifically, the first precursor film and the second precursor film constituting the stacked structure. The stacked structure may be immersed in an immersion tank that contains a solution containing the extraction solvent for predetermined time to extract and remove the first pore forming agent and the second pore forming agent.

After extraction, the content of the pore forming agents remaining on the surface of and/or inside the stacked structure may be 1 wt% or less. The extraction solvent may be, for example, methyl ethyl ketone, hexane, and dichloromethane, but the present invention is not limited thereto. Although the time required for extraction and removal of the first pore forming agent and the second pore forming agent may be determined by the thickness and porosity of the stacked structure, when the thickness and porosity of the stacked structure are 1 to 15 µm, and 40 to 70 vol%, respectively, the time may be 10 minutes or less, and preferably, 5 minutes or less.

In addition, the stacked structure in which the first pore forming agent and the second pore forming agent are extracted and removed may be heated to remove the extraction solvent remaining in the stacked structure. Some of the extraction solvent applied in the step (e) may remain on the surface of and/or inside the stacked structure. Since the remaining extraction solvent may adversely affect a subsequent process and deteriorate the physical properties of a separator that is manufactured thereby, the stacked structure may be appropriately heated to a temperature higher than the boiling point of the extraction solvent to remove the extraction solvent remaining in the stacked structure.

The method of manufacturing a multi-layer separator may further include (e') heat-setting the stacked structure after the step (e). The heat-setting refers to a process of reducing residual stress by forcibly fixing a stacked structure to be shrunk by applying heat while fixing the stacked structure. A high heat-setting temperature is advantageous for lowering a shrinkage rate, but when the temperature is excessively high, the formed pores may be closed by partially melting the stacked structure, reducing permeability.

The heat-setting temperature is preferably selected in a range where 10 to 30 wt% of the crystallized part of the stacked structure is melted. When the heat-setting temperature is selected in the above range, it is possible to prevent the problem of no residual stress removal effect in the film due to insufficient rearrangement of polyolefin molecules in the stacked structure, and the problem of reduced permeability due to pores being closed due to partial melting. For example, the heat-setting temperature may range from 120 to 140°C, and preferably, from 123 to 135 °C, and the heat-setting time may range from 5 seconds to 1 minute.

Still another aspect of the present invention provides a multi-layer separator manufactured by the above-described manufacturing method, in which the thickness deviation of the outermost layer measured by the following equation is 10% or less, and preferably, 1 to 8.5%, 3 to 6.5%. Thickness deviation (%) = {(maximum thickness)-(minimum thickness)}/(minimum thickness * 100

In a conventional method of manufacturing a multi-layer separator, since interlayer lamination, that is, stacking, is performed by co-extrusion in the step before the pore structure is formed by stretching, there is a problem in that the structural properties of each layer become non-uniform during the subsequent film forming processes including stretching and extraction. Specifically, as the thickness deviation between areas of the outermost layer of a multi-layer separator increases, the mechanical properties of the separator itself may become non-uniform, and particularly, during battery assembly using the separator, a region where the thickness is significantly thinner than the surrounding area is easily damaged or broken. This problem is more prominent in thin film-type separators (thickness: about 15 µm or less, and preferably, about 10 µm or less) corresponding to the recent trends of integrated and high-capacity batteries.

Therefore, since the multi-layer separator is manufactured by a method of stretching the stacked structure, which is obtained by laminating the first precursor film and the second precursor film, each of which has a predetermined pore structure, in the machine direction (MD), and then extracting and removing the first pore forming agent and the second pore forming agent, the structural properties of all layers constituting the multi-layer separator may be uniformized to ensure mechanical properties, and the number of stretching machines required for manufacturing the multi-layer separator may be minimized to improve productivity and economic feasibility.

FIG. 3 illustrates a method of measuring thickness deviation of a multi-layer separator according to one embodiment of the present invention. Referring to FIG. 3, the thickness deviation of the outermost layer may be calculated through the above equation and the thickness of each sample measured through the following method. In the above equation, the thickness deviation is determined by a method that includes obtaining five samples having a size of 20 mm* 100 mm (MD*TD) by cutting the multi-layer separator to 100 mm* 100 mm (MD*TD) and dividing the multi-layer separator into 5 equal parts in the machine direction (MD); measuring the thickness of the outermost layer of the sample at the center thereof in the transverse direction (TD); and calculating a thickness deviation according to the above equation based on the maximum and minimum values of the thickness.

In addition, the multi-layer separator may satisfy at least one, and preferably, all of the conditions (i) to (vi) below.
(i) thickness: 1 to 15 µm, preferably, 5 to 12 µm, (ii) puncture strength: 600 gf or more, preferably, 700 to 1,000 gf, more preferably, 750 to 900 gf, (iii) machine direction (MD) tensile strength: 1,300 to 2,000 kgf/cm², preferably, 1,400 to 1,800 kgf/cm², (iv) transverse direction (TD) tensile strength: 3,000 to 6,000 kgf/cm², preferably, 3,500 to 5,500 kgf/cm², more preferably, 4,000 to 5,400 kgf/cm², (v) machine direction (MD) tensile elongation: 150 to 450%, preferably, 200 to 400%, more preferably, 230 to 350%, and (vi) transverse direction (TD) tensile elongation: 30 to 100%, preferably, 40 to 90%.

Hereinafter, examples of the present invention will be described in detail.

### Example 1

A first composition in which 28 parts by weight of HDPE having a weight average molecular weight of 600,000 and 72 parts by weight of paraffin oil having a kinematic viscosity at 40 °C of 70 cSt were mixed was put into a twin screw extruder (first extruder, inner diameter: 58 mm, L/D=56). The first composition was discharged from the first extruder with a T-die having a width of 400 mm under conditions of a screw rotation speed of 120 rpm and a temperature of 210 °C and then passed through a casting roll having a temperature of 70 °C, thereby obtaining a first sheet having a thickness of 800 µm.

A second composition, which is the same as the first composition, was put into a twin screw extruder (second extruder, inner diameter: 58 mm, L/D=56) which has the same components as the first extruder and was arranged in parallel. The second composition was discharged from the first extruder with a T-die having a width of 400 mm under conditions of a screw rotation speed of 120 rpm and a temperature of 210 °C and then passed through a casting roll having a temperature of 70 °C, thereby obtaining a second sheet having a thickness of 800 µm.

The first sheet and the second sheet were put into the first stretching machine and a second stretching machine (roll stretching machines) arranged in parallel to each other, respectively, and stretched 8 times in the machine direction (MD) at 120 °C, thereby obtaining first and second precursor films. Here, the first stretching machine and a second stretching machine refer to stretching machines located at the rear end of the first extruder and the second extruder, respectively.

The first precursor film and the second precursor film were put into a laminator installed at the rear end of the first stretching machine and a second stretching machine, thereby obtaining a stacked structure in which the first precursor film and the second precursor film face to each other and were laminated.

The stacked structure was put into a third stretching machine (tenter machine), stretched 9 times in the transverse direction (TD) at 126 °C, and immersed for 1 minute in a 25 °C dichloromethane leaching vessel to extract and remove paraffin oil, followed by drying the resulting product for 5 minutes at 38 °C. The resulting stacked structure was stretched 1.5 times in the transverse direction (TD) at 138 °C, relaxed 10%, and heat-set, thereby obtaining a separator.

### Example 2

A separator was manufactured in the same manner as in Example 1, except that HDPE having a weight average molecular weight of 600,000 in the second composition was changed to UHMWPE having a weight average molecular weight of 1,000,000.

### Example 3

A separator was manufactured in the same manner as in Example 1, except that a second composition further included ethylene vinyl acetate (EVA, HTC) in which the content of vinyl acetate was 28 wt%, and the contents (parts by weight) of HDPE, ethylene vinyl acetate, and paraffin oil in the second composition were changed to 30.4 parts by weight, 1.6 parts by weight, and 68.0 parts by weight.

### Example 4

A separator was manufactured in the same manner as in Example 3, except that HDPE having a weight average molecular weight of 600,000 in the second composition was changed to UHMWPE having a weight average molecular weight of 1,000,000.

### Example 5

A separator was manufactured in the same manner as in Example 1, except that a process of applying 50 kHz ultrasonic waves to the entire surface of the stacked structure during lamination to bond (fuse) the interface of the stacked structure was further included.

### Example 6

A separator was manufactured in the same manner as in Example 2, except that a process of applying 50 kHz ultrasonic waves to the entire surface of the stacked structure during lamination to bond (fuse) the interface of the stacked structure was further included.

### Example 7

A separator was manufactured in the same manner as in Example 3, except that a process of applying 50 kHz ultrasonic waves to the entire surface of the stacked structure during lamination to bond (fuse) the interface of the stacked structure was further included.

### Example 8

A separator was manufactured in the same manner as in Example 4, except that a process of applying 50 kHz ultrasonic waves to the entire surface of the stacked structure during lamination to bond (fuse) the interface of the stacked structure was further included.

### Comparative Example 1

A first polyolefin solution was prepared by putting 25 parts by weight of a mixture including 60 wt% of UHMWPE having a weight average molecular weight of 2,000,000 and 40 wt% of HDPE having a weight average molecular weight of 560,000, and 75 parts by weight of paraffin oil having a kinematic viscosity at 40 °C of 35 cSt into a twin screw extruder (first extruder, inner diameter: 58 mm, L/D=56), and melting and-kneading the resulting paraffin oil mixture under conditions of a screw rotation speed of 250 rpm and 230 °C.

A second polyolefin solution was prepared by putting 30 parts by weight of a mixture including 50 wt% of HDPE having a weight average molecular weight of 560,000 and 50 wt% of polypropylene having a weight average molecular weight of 1,600,000, and 70 parts by weight of paraffin oil having a kinematic viscosity at 40 °C of 35 cSt into a twin screw extruder (second extruder, inner diameter: 58 mm, L/D=56), which has the same components as the first extruder and was arranged in parallel, and melting and kneading the resulting paraffin oil mixture under the same conditions, thereby preparing a.

The first polyolefin solution and the second polyolefin solution were provided to a threelayered T-die from the first extruder and the second extruder, respectively, and extruded such that the layer thickness ratio of first/second/first polyolefin solutions was 35/30/35. The extruded body was cooled while being passed through a cooling roll (diameter: 500 mm) at 37 °C to manufacture a gel-like three-layer sheet. The gel-like three-layer sheet was simultaneously biaxially stretched 5*5 times (MD*TD) at 114 °C, and then immersed in a 25 °C dichloromethane leaching vessel for 5 minutes to extract and remove paraffin oil, thereby manufacturing a porous film. The porous film was put into a tenter machine, restretched 1.4 times in the transverse direction (TD) at 124 °C, and heat-set, thereby manufacturing a separator.

### Comparative Example 2

29.5 parts by weight of HDPE having a weight average molecular weight (Mw) of 350,000, 0.5 parts by weight of silane-modified HDPE, and 70 parts by weight of paraffin oil having a kinematic viscosity at 40 °C of 70 cSt were mixed, and then put into a twin screw extruder (inner diameter: 58 mm, L/D=56). Dibutyltin dilaurate, which is a crosslinking catalyst, was pre-dispersed in a portion of the paraffin oil, and injected using a side injector of the twin screw extruder to be 0.5 wt% based on the total weight of the material passing through the twin screw extruder. The resulting product was discharged from the twin screw extruder with a T-die having a width of 300 mm under conditions of a screw rotation speed of 40 rpm and a temperature of 200 °C and passed through a casting roll having a temperature of 40 °C, thereby obtaining a base sheet having a thickness of 800 µm.

The base sheet was stretched 6 times in the machine direction (MD) in a roll stretching machine at 110 °C and stretched 7 times in the transverse direction (TD) in a tenter machine at 125 °C to manufacture a film. The film was immersed in a 25 °C dichloromethane leaching vessel for 1 minute to extract and remove the paraffin oil, and dried for 5 minutes at 50 °C, thereby manufacturing a porous film. Subsequently, after being heated in the tenter machine to 125 °C, the resulting film was stretched 1.45 times in the transverse direction (TD) and relaxed, and then heat-set to 1.25 times the size before stretching. The film was crosslinked in a constant temperature and humidity chamber at 85 °C and a humidity of 85% for 72 hours, thereby manufacturing a separator.

### Comparative Example 3

30 parts by weight of a mixture including 64 wt% of UHMWPE having a weight average molecular weight (Mw) of 1,000,000 and 36 wt% UHMWPE having a weight average molecular weight (Mw) of 1,500,000 and 70 parts by weight of paraffin oil having a kinematic viscosity at 40 °Cof 70 cSt were mixed and put into a twin screw extruder (inner diameter: 58 mm, L/D=56). The resulting product was discharged from the twin screw extruder with a T-die having a width of 300 mm under conditions of a screw rotation speed of 40 rpm and a temperature of 200 °C and passed through a casting roll having a temperature of 40 °C, thereby obtaining a base sheet having a thickness of 800 µm.

The base sheet was stretched 6 times in the machine direction (MD) in a roll stretching machine at 110 °C and stretched 7 times in the transverse direction (TD) in a tenter machine at 125 °C to manufacture a film. The film was immersed in a 25 °C dichloromethane leaching vessel for 1 minute to extract and remove the paraffin oil, and dried for 5 minutes at 50 °C, thereby manufacturing a porous film. Subsequently, after being heated in a tenter machine to 125 °C, the film was stretched 1.45 times in the transverse direction (TD), relaxed and then heat-set to 1.25 times the size before stretching, thereby manufacturing a separator.

### Comparative Example 4

A separator was manufactured in the same manner as in Comparative Example 3, except that 30 parts by weight of a mixture including 42 wt% of HDPE having a weight average molecular weight of 600,000 and 58 wt% of UHMWPE having a weight average molecular weight (Mw) of 1,500,000 and 70 parts by weight of paraffin oil having a kinematic viscosity at 40 °C of 70 cSt were mixed and put into a twin screw extruder (inner diameter: 58 mm, L/D=56).

### Comparative Example 5

100 parts by weight of a mixture including 90 wt% of UHMWPE having a weight average molecular weight of 1,000,000 and 10 wt% of HDPE having a weight average molecular weight of 380,000 was put into a twin screw extruder (first extruder, inner diameter: 58mm, L/D=42). A first polyethylene solution was prepared by injecting 250 parts by weight of paraffin oil using a side injector of the first extruder, and performing melt-kneading under conditions of 210 °C and 100 rpm.

100 parts by weight of a mixture including 10 wt% of UHMWPE having a weight average molecular weight of 1,000,000 and 90 wt% of HDPE having a weight average molecular weight of 380,000 was put into a twin screw extruder (second extruder, inner diameter: 58 mm, L/D=42). A second polyethylene solution was prepared by injecting 250 parts by weight of paraffin oil using a side injector of the second extruder and performing melt-kneading under conditions of 210 °C and 100 rpm.

The first and second polyethylene solutions were alternately laminated by passing a multiblock (multilayering device) of an extruder, and then a multi-layer structure composed of 20 layers was discharged through a T-die.

A gel-like base sheet having a thickness of 1,100 µm was manufactured while passing the multi-layer structure through a cooling roll controlled to 40 °C. The base sheet was simultaneously biaxially stretched 8*8 times (MD*TD) at 124 °C, immersed in a 25 °C dichloromethane leaching vessel for 5 minutes to extract and remove paraffin oil, and then dried at 50 °C for 5 minutes, thereby manufacturing a porous film. The porous film was put into a tenter machine, restretched 1.4 times in the transverse direction (TD) at 125 °C and heat-set, thereby manufacturing a separator.

### Comparative Example 6

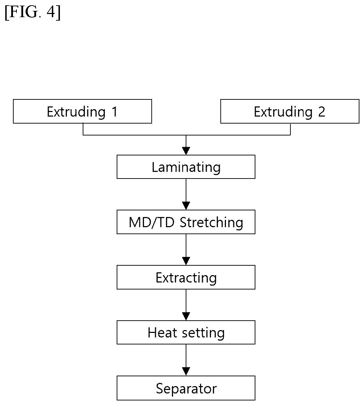

A separator was manufactured by the method according to FIG. 4 as follows. A first composition in which 28 parts by weight of HDPE having a weight average molecular weight of 600,000 and 72 parts by weight of paraffin oil having a kinematic viscosity at 40 °C of 70 cSt were mixed was put into a twin screw extruder (first extruder, inner diameter: 58 mm, L/D=56). The first composition was discharged from the first extruder with a T-die having a width of 400 mm under conditions of a screw rotation speed of 120 rpm and a temperature of 210 °C and then passed through a casting roll having a temperature of 70 °C, thereby obtaining a first sheet having a thickness of 800 µm.

A second composition, which is the same as the first composition, was put into a twin screw extruder (second extruder, inner diameter: 58 mm, L/D=56) which has the same components as the first extruder and was installed in parallel. The second composition was discharged from the first extruder with a T-die having a width of 400 mm under conditions of a screw rotation speed of 120 rpm and a temperature of 210 °C and then passed through a casting roll having a temperature of 70 °C, thereby obtaining a second sheet having a thickness of 800 µm.

The first sheet and the second sheet were put into a laminator installed at the rear end of the first extruder and the second extruder, thereby obtaining a stacked structure in which the first sheet and the second sheet faced to each other and were laminated. The stacked structure was put into a stretching machine (roll stretching machine) and stretched 8 times in the machine direction (MD) at 120 °C, thereby obtaining a precursor film. The precursor film was put into a tenter machine, stretched 9 times in the transverse direction (TD) at 126 °C, and immersed for 1 minute in a 25 °C dichloromethane leaching vessel to extract and remove paraffin oil, followed by drying the resulting product for 5 minutes at 38 °C. The resulting stacked structure was stretched 1.5 times in the transverse direction (TD) at 138 °C and relaxed 10% and then heat-set, thereby obtaining a separator.

### Experimental Example 1

Samples 1 to 5 having a size of 20 mm* 100 mm (MD*TD) were obtained by cutting each of the separators manufactured in Examples and Comparative Examples above to 100 mm* 100 mm and then dividing the cut separator specimen into five equal parts in the machine direction (MD).

The cross-section of each sample was photographed using a SEM, the thickness (µm) of the outermost layer was measured at the center of each sample in the transverse direction (TD), and based on this, a thickness deviation defined by the following equation was calculated and shown in Table 1 below. Thickness deviation (%) = {(maximum thickness)-(minimum thickness)}/(minimum thickness) * 100

In Examples 1 to 8 and Comparative Example 6, a layer derived from the first composition, and in Comparative Examples 1 to 5, a layer derived from the first polyolefin solution were selected as the outermost layer, respectively. Since the separators according to Comparative Examples 2 to 4 have a single-layer structure, they were excluded from the measurement targets.

**[Table 1]**

| Classification | Thickness (Sample 1) | Thickness (Sample 2) | Thickness (Sample 3) | Thickness (Sample 4) | Thickness (Sample 5) | Thickness deviation |
|---|---|---|---|---|---|---|
| Example 1 | 5.10 | 5.02 | 4.98 | 5.23 | 4.83 | 8.21 |
| Example 2 | 5.09 | 5.45 | 5.32 | 5.27 | 5.29 | 7.07 |
| Example 3 | 5.05 | 5.07 | 5.30 | 5.35 | 5.17 | 6.06 |
| Example 4 | 5.51 | 5.49 | 5.77 | 5.54 | 5.57 | 5.10 |
| Example 5 | 5.07 | 5.02 | 5.05 | 5.00 | 5.23 | 4.57 |
| Example 6 | 5.30 | 5.17 | 5.10 | 5.20 | 5.17 | 4.04 |
| Example 7 | 5.17 | 5.28 | 5.17 | 5.10 | 5.20 | 3.52 |
| Example 8 | 5.35 | 5.27 | 5.45 | 5.32 | 5.29 | 3.54 |
| Comparative Example 1 | 3.45 | 3.23 | 3.57 | 3.33 | 3.28 | 10.71 |
| Comparative Example 5 | 0.98 | 0.91 | 0.93 | 0.95 | 0.87 | 12.20 |
| Comparative Example 6 | 4.72 | 4.88 | 5.02 | 5.26 | 4.76 | 11.46 |

### Experimental Example 2

The thickness, puncture strength, tensile strength, and tensile elongation of the separators manufactured in Examples and Comparative Examples were measured by the following methods. When there was no separate mention of temperature, measurements were performed at room temperature (25 °C), and the results are shown in Table 2 below.
- Thickness (µm): The thickness of a support sample was measured using a microthickness gauge.
- Puncture strength (gf): Using a puncture strength meter, a force was applied with a stick to a separator sample having a size of 100 mm*50 mm, and the force applied until the sample was pierced was measured.
- Tensile strength (kgf/cm²): Using a tensile strength tester, the stress applied until fracture occurred was measured in the machine direction (MD) and the transverse direction (TD) for a separator sample having a size of 20 mm*200 mm.
- Tensile elongation (%): Using a tensile strength tester, the rate at which a sample was stretched until fracture occurred in the machine direction (MD) and the transverse direction (TD) was measured for a separator sample having a size of 20 mm*200 mm.

**[Table 2]**

| Classification | Thickness | Puncture strength | MD Tensile strength | TD Tensile strength | MD Tensile elongation | TD Tensile elongation |
|---|---|---|---|---|---|---|
| Example 1 | 10.2 | 750 | 1,534 | 4,050 | 273 | 80 |
| Example 2 | 10.8 | 764 | 1,410 | 3,782 | 233 | 51 |
| Example 3 | 10.6 | 782 | 1,580 | 5,101 | 322 | 37 |
| Example 4 | 11.3 | 830 | 1,434 | 4,150 | 273 | 39 |
| Example 5 | 10.3 | 803 | 1,641 | 4,334 | 292 | 86 |
| Example 6 | 10.5 | 802 | 1,481 | 3,971 | 245 | 54 |
| Example 7 | 10.5 | 813 | 1,643 | 5,305 | 335 | 38 |
| Example 8 | 10.8 | 855 | 1,477 | 4,275 | 281 | 40 |
| Comparative Example 1 | 100 | 285 | 2,510 | 3,120 | 132 | 156 |
| Comparative Example 2 | 11.1 | 434 | 2,024 | 1,762 | 147 | 133 |
| Comparative Example 3 | 9.7 | 496 | 2,840 | 3,216 | 75 | 79 |
| Comparative Example 4 | 9.4 | 481 | 2,778 | 2,909 | 81 | 75 |
| Comparative Example 5 | 20.0 | 539 | 2,653 | 2,365 | 89 | 92 |
| Comparative Example 6 | 10.1 | 585 | 1,273 | 3,362 | 227 | 66 |

The above-described description of the present invention is merely provided to exemplify the present invention, and it will be understood by those of ordinary skill in the art to which the present invention belongs that the present invention can be implemented in modified forms without departing from the essential features of the present invention. Therefore, the exemplary embodiments described above should be interpreted as illustrative and not limited in any aspect. For example, each component described as a single type may be implemented in a distributed manner, and components described as being distributed may also be implemented in a combined form.

The scope of the present invention is indicated by the following claims, and all changes or modifications derived from the meaning and scope of the claims and their equivalent concepts should be interpreted as being included in the scope of the present invention.

## Claims

1. A method of manufacturing a multi-layer separator, comprising:
(a) extruding a first composition including a first polyolefin and a first pore forming agent to obtain a first sheet;
(b) extruding a second composition including a second polyolefin and a second pore forming agent to obtain a second sheet;
(c) stretching each of the first sheet and the second sheet in the machine direction (MD) to obtain a first precursor film and a second precursor film;
(d) laminating the first precursor film and the second precursor film to obtain a stacked structure; and
(e) stretching the stacked structure in the transverse direction (TD), and then removing the first pore forming agent and the second pore forming agent from the stacked structure.

2. The method of claim 1, wherein each of the first polyolefin and the second polyolefin includes one selected from the group consisting of polyethylene, polypropylene, polybutylene, polymethylpentene, and a combination or copolymer of two or more thereof.

3. The method of claim 2, wherein the weight average molecular weight of each of the first polyolefin and the second polyolefin ranges from 300,000 to 2,000,000.

4. The method of claim 1, wherein each of the first pore forming agent and the second pore forming agent is paraffin oil having a kinematic viscosity at 40 °C of 50 to 100 cSt.

5. The method of claim 1, wherein the first composition or the second composition further includes a hydrophilic polymer.

6. The method of claim 5, wherein the content of the hydrophilic polymer in the first composition or the second composition is 0.1 to 5 wt%.

7. The method of claim 6, wherein the hydrophilic polymer is one selected from the group consisting of ethylene vinyl acetate, ethylene vinyl alcohol, polyvinyl alcohol, polyacrylic acid, a polyoxyethylene-polyoxypropylene block copolymer, polyethylene glycol, polyethylene oxide, polyvinylpyrrolidone, polyvinylacetal, polyvinylbutyral, a cellulose derivative, glycerol, and a combination of two or more thereof.

8. The method of claim 1, wherein in the step (d),
pressing the first precursor film and the second precursor film to face each other; and
adhering at least a part of the interface of the first precursor film and second precursor film.

9. A multi-layer separator manufactured by the manufacturing method according to claim 1, wherein the thickness deviation of the outermost layer measured by the following equation is 10% or less: Thickness deviation (%) = {(maximum thickness)-(minimum thickness)}/(minimum thickness) * 100 where the thickness deviation is determined by a method that includes obtaining five samples having a size of 20 mm* 100 mm (MD*TD) by cutting the multi-layer separator to 100 mm* 100 mm (MD*TD) and dividing the multi-layer separator into 5 equal parts in the machine direction (MD); measuring the thickness of the outermost layer of the sample at the center thereof in the transverse direction (TD); and calculating a thickness deviation according to the above equation based on the maximum and minimum values of the thickness.

10. The separator of claim 9, wherein the multi-layer separator satisfies at least one of the following conditions (i) to (vi):
(i) thickness: 1 to 15 µm,
(ii) puncture strength: 600 gf or more,
(iii) machine direction (MD) tensile strength: 1,300 to 2,000 kgf/cm²,
(iv) transverse direction (TD) tensile strength: 3,000 to 6,000 kgf/cm²,
(v) machine direction (MD) tensile elongation: 150 to 450%, and
(vi) transverse direction (TD) tensile elongation: 30 to 100%.
